**Europäisches Patentamt**

**European Patent Office**

**Office européen des brevets**

(11) Numéro de publication: **0 349 361**
A1

## DEMANDE DE BREVET EUROPEEN

(21) Numéro de dépôt: **89401607.0**

(22) Date de dépôt: **09.06.89**

(51) Int. Cl.⁵: **B 03 B 5/44**

(30) Priorité: **27.06.88 FR 8808620**

(43) Date de publication de la demande:
**03.01.90 Bulletin 90/01**

(84) Etats contractants désignés:
**AT BE CH DE ES FR GB IT LI NL**

(71) Demandeur: **T.E.S. S.A.**
**Zone Industrielle B.P. no 20**
**F-42153 Riorges (FR)**

(72) Inventeur: **Royal, Gabriel**
**3, rue Prévert**
**F-42300 Villerest (FR)**

(74) Mandataire: **Kügele, Bernhard et al**
**NOVAPAT-CABINET CHEREAU 63 bis, boulevard Bessiéres**
**F-75017 Paris (FR)**

(54) Procédé de triage de matières organiques mélangées et installation pour sa mise en oeuvre.

(57) L'invention concerne une installation et un procédé de triage de matières organiques mélangées à des produits indésirables lourds tels que, composés métalliques, produits de synthèse, verre, cailloux, bois, etc.

Le procédé selon l'invention est caractérisé en ce qu'on verse le mélange à séparer dans une cuve (1) contenant un liquide (2, 3) de densité intermédiaire entre la densité des produits organiques (6) et des produits lourds (7) à séparer.

Application au compostage des déchets.

**Description**

# PROCEDE DE TRIAGE DE MATIERES ORGANIQUES MELANGEES ET INSTALLATION POUR SA MISE EN OEUVRE

L'invention concerne un procédé de triage de matières organiques mélangées à des produits indésirables lourds tels que composés métalliques, produits de synthèse, verre, cailloux, etc. Un tel triage est par exemple nécessaire pour le compostage de produits, sous-produits et/ou déchets d'origine humaine, animale et/ou végétale, qui se présentent mélangés à des indésirables, par exemple dans les dépôts d'ordures, les boues de stations d'épuration, les lisiers, etc.

La séparation des matières organiques sous forme de compost permet une utilisation des matières séparées, par exemple dans l'agriculture. Il est cependant nécessaire, que la proportion d'indésirables subsistant après séparation soit assez faible, en général au plus de 20 ou 35 % selon les utilisations prévues.

Les procédés de séparation connus sont essentiellement mécaniques et utilisent des techniques de criblage, de triage par rebond, de balistiquation, de fluidisation sur table vibrante, de séparation aérobique, etc. Ces procédés connus ne permettent pas d'atteindre, dans des conditions économiques et de manière sûre, les proportions d'indésirables indiquées précédemment.

En effet, ces procédés mécaniques ne permettent pas une séparation satisfaisante des inertes totaux, surtout si les produits à séparer sont initialement fragmentés dans un broyeur à percussion. Toute tentative de diminuer la proportion de produits indésirables lourds conduit à une perte importante de matières organiques, ce qui nuit bien entendu au rendement.

La présente invention vise à fournir un procédé de triage ne présentant pas les inconvénients des procédés connus, et qui permette un compostage en continu de produits organiques, ce compostage pouvant être lent, accéléré ou par méthanisation.

A cet effet, le procédé selon l'invention est caractérisé en ce qu'on verse le mélange à séparer dans une ouve contenant un liquide de densité intermédiaire entre la densité des produits organique et des produits lourds à séparer.

Contrairement, à la pratique utilisée jusqu'à présent d'une séparation par voie solide, la présente invention utilise un procédé de séparation par voie liquide. Cette mise en contact avec un liquide d'un mélange contenant des déchets organiques n'avait pas été envisagée jusqu'à présent du fait qu'on répugnait à une telle mise en contact et qu'on n'avait pas pensé qu'elle puisse permettre une séparation très poussée des matières organiques. Le procédé selon l'invention permet en outre une récupération maximale des matières orangiques avec un très haut rendement en séparation d'inertes lourds, assurant ainsi un rendement très élevé. De plus, les inertes ainsi séparés, qui ne contiennent pratiquement plus de matières organiques, peuvent facilement être stockés, par exemple sur une décharge conventionnelle, et peuvent même servir de couverture à la décharge conformément à la réglementation concernant la couverture des décharges.

On peut utiliser divers liquides possédant la caractéristique de densité conforme à l'invention. On peut citer par exemple le trichloréthylène, le trichloréthane, le perchloréthylène, stabilisés ou non stabilisés. Les propriétés de solubilité de ces composés facilitent en outre la séparation par dégraissage du mélange.

Lorsque le mélange à séparer contient, en plus des matières organiques et des produits indésirables lourds, des matières à densité intermédiaire telles que des matières plastiques, l'invention prévoit qu'on verse le mélange à séparer dans une cuve contenant au moins deux liquides non miscibles de densités différentes intermédiaires entre la densité des produits organiques et des produits lourds à séparer. L'utilisation de deux liquides peut permettre en outre une séparation plus simple des matières organiques surnageant sur le liquide le plus léger. On peut citer par exemple, pour deux liquides, le trichloréthane et le perchloréthylène stabilisé.

De préférence, on agite le bain dans la cuve de manière à agiter sa surface libre. On peut utiliser des moyens mécaniques tels que pales, bras, etc., ou des moyens hydrauliques.

En plus ou à la place des moyens d'agitation, on peut utiliser une source ultra-sonore qui agit pour séparer les composants du mélange.

Conformément à l'invention, on évacue les matières flottantes à la surface du bain de manière continue ou discontinue. On peut effectuer cette évacuation par des moyens mécaniques tels que des racleurs de surface ou par des vérins.

On peut également évacuer les matières flottantes au moyen d'une surverse en déplaçant les matières flottantes par un mouvement du bain. On peut dans ce cas filtrer le liquide en continu.

L'invention prévoit également d'évacuer les corps lourds ayant coulé au fond de la cuve. De préférence, le fond de la cuve est incliné vers un dispositif de reprise constitué par une drague, une vis sans fin, ou un piston. Selon une variante de mise en oeuvre du procédé selon l'invention, on évacue les corps lourds par un tablier mobile.

Conformément à l'invention, on soumet les matériaux séparés à un égouttage et un séchage par de l'air chaud ou froid, par rayonnement thermique, ou par émission de micro-ondes.

De préférence, on récupère le liquide évaporé par un dispositif à condensation, afin d'économiser ce liquide et de limiter la pollution ambiante.

L'invention concerne également une installation pour la mise en oeuvre du procédé précédent.

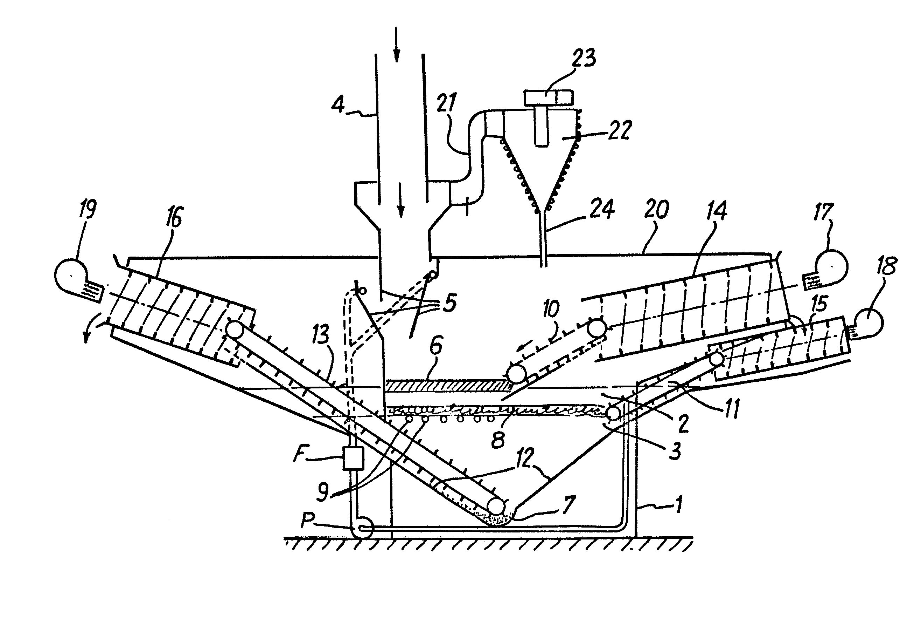

L'invention sera bien comprise à la lecture de la description suivante faite en se référant au dessin annexé dont la figure unique est un schéma d'une installation selon un exemple de réalisation de l'invention.

L'installation comprend une cuve 1 qui, dans l'exemple représenté, contient deux liquides non miscibles 2 et 3, le liquide 2 ayant une densité inférieure à celle du liquide 3. Au-dessus de la cuve 1 et sur le côté de celle-ci est disposée une chute 4 pour les produits à séparer, munie à sa partie inférieure d'un déflecteur 5. Au lieu d'une chute à gravitation, on peut bien entendu utiliser un système mécanique d'amenage tel que bande sans fin, bande à godets, un dispositif pneumatique, etc.

Dès que le mélange est tombé dans la cuve 1, les matières organiques légères 6 flottent à la surface du liquide 2 et les matières lourdes 7 coulent au fond de la cuve 1. Les matières à densité intermédiaire 8 flottent à la surface de séparation entre les liquides 2 et 3. Un générateur d'ultrasons 9 facilite la séparation des divers composants du mélange. En outre, la surface libre du liquide 2 est mise en agitation par des moyens mécaniques ou hydrauliques, ce qui agite et retourne les matières surnageantes 6.On peut utiliser une pompe de circulation P munie d'un filtre F.

Les matières 6 et 8 sont évacuées séparément par des chaînes d'évacuation 10 et 11 respectivement. Ces chaînes 10 et 11, disposées à l'opposé de la chute 4 au-dessus de la cuve 1, peuvent être constituées par des racleurs de surface à commande électrique, hydraulique ou pneumatique, par des vérins hydrauliques, pneumatiques ou électriques. On peut aussi lorsque le bain 2-3 est agité, utiliser une surverse, avantageusement munie d'un dispositif de filtration (non représentés).

Les produits lourds 7 ayant coulé au fond 12 de la cuve 1, qui est incliné , sont entraînés vers un dispositif de reprise constitué, dans l'exemple représenté , par une bande à godets 13 inclinée. On peut utiliser, au lieu de la bande 13 constituant une drague, une vis sans fin ou un piston.

Les dispositifs d'évacuation 10, 11, 13 amènent respectivement les produits légers 6, intermédiaires 8 et lourds 7 dans des tubes de séchage rotatifs 14, 15, 16 respectivement, qui sont alimentés chacun en air chaud par un souffleur 17, 18, 19.

La cuve 1 est fermée par un couvercle 20 laissant libre l'arrivée de la chute 1. Une dérivation 21 de la chute 1 débouche dans un condenseur cyclonique 22 muni d'un ventilateur d'extraction d'air 23 et d'une goulotte 24 pour le retour des condensats dans la cuve 1. Le liquide évaporé de la cuve 1 est ainsi récupéré et l'ensemble de l'installation est isolé pour limiter la pollution de l'air autour de l'installation.

Bien que l'invention ait été décrite en référence à un exemple de réalisation particulier, il est bien entendu qu'elle n'y est nullement limitée et que l'utilisation de moyens équivalents entre dans le cadre de la présente invention.

## Revendications

1 - Procédé de triage de matières organiques mélangées à des produits indésirables lourds tels que des composés métalliques, des produits de synthèse, verre, cailloux etc., consistant à verser le mélange à séparer dans une cuve (1) contenant un liquide (2, 3) de densité intermédiaire entre la densité des produits organiques (6) et des produits lourds (7) séparés, caractérisé en ce que ledit liquide (2, 3) est choisi parmi le trichloréthylène, le trichloréthane, le perchloréthylène, stabilisé ou non stabilisé.

2 - Procédé de triage selon la revendication 1, caractérisé en ce ledit liquide de séparation (2) est constitué par du perchloréthylène.

3 - Procédé de triage selon la revendication 1, caractérisé en ce que le liquide de séparation est constitué par du trichloréthane.

4 - Procédé de triage selon l'une quelconque des revendications 1 à 3, caractérisé en ce que l'on verse le mélange à séparé dans une cuve (1) contenant au moins deux liquides non missibles (2, 3) de densité différentes intermédiaires entre la densité des produits organiques (6) et les produits lourds (7) à séparer.

5 - Procédé selon l'une quelconque des revendications de 1 à 4, caractérisé en ce que l'on agite le bain (2, 3) dans la cuve (1) de manière à agiter sa surface libre.

6 - Procédé selon la revendication 5, caractérisé en ce que l'on utilise des moyens d'agitation mécaniques tels que pales, bras etc..., ou des moyens hydrauliques.

7 - Procédé selon l'une des revendications 1 à 5, caractérisé en ce que l'on utilise une source ultra-sonore (9) qui agit pour séparer les composants (6, 7, 8) du mélange.

8 - Procédé selon l'une des revendications 1 à 7, caractérisé en ce que l'on évacue les matières flottantes (6) à la surface du bain de manière continue ou discontinue.

9 - Procédé selon la revendication 8, caractérisé en ce que l'on effectue l'évacuation par des moyens mécaniques tels que des racleurs de surface ou par des vérins.

10 - Procédé selon l'une des revendications 3 et 4, caractérisé en ce que l'on évacue les matières flottantes 8) à la surface de séparation entre les liquides (2, 3).

11 - Procédé selon l'une des revendications 8 et 10, caractérisé en ce que l'on évacue les matières flottantes (6) au moyen d'une surverse en déplaçant les matières flottantes (6) par un mouvement du bain (2, 3).

12 - Procédé selon la revendication 11, caractérisé en ce que l'on filtre les matières (6) évacuées par la surverse.

13 - Procédé selon l'une des revendications 1 à 12, caractérisé en ce que l'on évacue les corps lourds (7) ayant coulés au fond de la cuve (1).

14 - Procédé selon la revendication 12, caractérisé en ce que le fond (12) de la cuve (1) est incliné vers un dispositif de reprise (13) constitué par une drague, une vis sans fin ou un piston.

15 - Procédé selon la revendication 12, caractérisé en ce que l'on évacue les corps lourds (7) par un tablier mobile.

16 - Procédé selon l'une des revendications 1 à 15, caractérisé en ce que l'on soumet les matériaux séparés (6, 7, 8) à un égouttage et à un séchage par de l'air chaud ou froid, par rayonnement thermique ou par émission de micro-ondes.

17 - Procédé selon l'une des revendications 1 à 16, caractérisé en ce que l'on récupère le liquide évaporé par un dispositif à condensation (22, 23, 24).

18 - Installation pour la mise en oeuvre du procédé selon l'une quelconque des revendications précédentes, caractérisée en qu'elle comprend une cuve contenant un liquide choisi parmi le perchloréthylène, le trichloréthane ou le trichloréthylène, des moyens d'amenée (4) du mélange à séparer, et des moyens d'extraction (10, 11, 13) des composants séparés.

19 - Installation selon la revendication 18, caractérisée en ce qu'elle comprend des moyens d'agitation de la surface du bain (2, 3).

20 - Installation selon l'une des revendications 18 et 19, caractérisée en ce qu'elle comprend une source ultra-sonore (9) qui agit pour séparer les composants (6, 7, 8) du mélange.

21 - Installation selon l'une des revendications 18 et 19, caractérisée en ce qu'elle comprend une surverse d'évacuation des matières flottantes (7).

22 - Installation selon l'une des revendications 18 à 21, caractérisée en ce que le fond (12) de la cuve (1) est incliné vers un dispositif de reprise (13) constitué par une drague, une vis sans fin ou un piston.

23 - Installation selon l'une des revendications 18 à 21, caractérisée en ce que le fond de la cuve (1) comporte un tablier mobile.

24 - Installation selon l'une des revendications 18 à 23, caractérisée en ce qu'elle comprend des moyens d'égouttage et de séchage ( 14, 17; 15, 18; 16, 19) des matières séparées évacuées.

25 - Installation selon l'une des revendications 18 à 24, caractérisée en ce qu'elle comprend un dispositif de récupération par condensation (22, 23, 24) du liquide (2, 3,) évaporé.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 228 724 (DANECO DANIELI ECOLOGIA S.p.A.)<br>* Colonne 1, lignes 1-5; colonne 5, ligne 16 - colonne 6, ligne 33; figures * | 1-3,5,6 ,8,11- 14,18, 19,21, 22 | B 03 B 5/44 |
| A | | 4,15 | |
| Y | --- <br> US-A-4 498 246 (CANTU et al.)<br>* Colonne 2, lignes 27-68 * | 1-3,5,6 ,8,11- 14,18, 19,21, 22 | |
| A | --- <br> DE-A-2 355 744 (LURIA BROTHERS & CO. INC.)<br>* Page 4, ligne 15 - page 5, ligne 7; page 7, ligne 12 - page 8, ligne 24; page 9, ligne 18 - page 13, ligne 10; figures * | 1,5,6,8 ,9,11, 13,14, 18,19, 21,22 | |
| A | --- <br> US-A-2 496 703 (EKBOM)<br>* Colonne 1, lignes 1-9; colonne 1, ligne 47 - colonne 2, ligne 4; colonne 2, lignes 34-51; colonne 3, ligne 64 - colonne 4, ligne 22; colonne 4, ligne 71 - colonne 5, ligne 12; colonne 6, lignes 32-45; figures * | 1,4-6,8 -14,18, 19,21, 22 | DOMAINES TECHNIQUES RECHERCHES (Int. Cl.4) <br><br> B 03 B |
| A | --- <br> US-A-2 138 825 (ALLEN)<br>* Page 1, colonne de gauche, lignes 36-50; page 2, colonne de gauche, ligne 62 - colonne de droite, ligne 44; figures * | 1,5,6,8 ,9,12- 14,16, 18,19, 22,24 | |
| A | --- <br> US-A-3 992 288 (KLING)<br>* Colonne 2, lignes 5-28 * <br> --- -/- | 7,20 | |

Le présent rapport a été établi pour toutes les revendications

| Lieu de la recherche | Date d'achèvement de la recherche | Examinateur |
|---|---|---|
| LA HAYE | 12-07-1989 | VAN DER ZEE W.T. |

Office européen
des brevets

**RAPPORT DE RECHERCHE EUROPEENNE**

Numero de la demande

EP 89 40 1607

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 483 768 (GAZZONI)<br>* Colonne 1, lignes 41-51; colonne 2, lignes 20-40; colonne 3, lignes 1-10,35-60; figures *<br>--- | 1,5,6,8<br>-11,13,<br>18,19,<br>21 | |
| A | FR-A-2 349 362 (CORNU)<br>* Page 1, lignes 1-19; figure *<br>--- | 4 | |
| A | EP-A-0 180 437 (MA INDUSTRIES INC.)<br>--- | | |
| P,A | US-A-4 775 106 (JHA et al.)<br>* Colonne 1, lignes 57-66 *<br>----- | 1-3,18 | |

**DOMAINES TECHNIQUES RECHERCHES (Int. Cl.4)**

Le présent rapport a été établi pour toutes les revendications

| Lieu de la recherche | Date d'achèvement de la recherche | Examinateur |
|---|---|---|
| LA HAYE | 12-07-1989 | VAN DER ZEE W.T. |

EPO FORM 1503 03.82 (P0402)